# EUROPEAN PATENT APPLICATION

(11) **EP 3 306 455 A1**
(43) Date of publication of application: **11.04.2018**
(21) Application number: 16799150.4
(22) Date of filing: 14.04.2016
(51) Int. Cl.: G06F 3/0481

(54) **METHOD AND APPARATUS FOR SWITCHING MULTIPLE FOLDERS, AND COMPUTER STORAGE MEDIUM**

(30) Priority: 25.05.2015 CN 201510270965
(71) Applicant: Oneplus Technology (Shenzhen) Co., Ltd., Shenzhen, Guangdong 518000 (CN)
(72) Inventor: ZHOU, Tong, Shenzhen Guangdong 518000 (CN); ZENG, Xi, Shenzhen Guangdong 518000 (CN)
(74) Representative: J A Kemp
(86) International application number: PCT/CN2016/079330
(87) International publication number: WO 2016/188261

(57) **Abstract**

A computer storage medium, and a method and apparatus for switching multiple folders. The method comprises: acquiring a folder, and displaying an interface of a current folder (S100); determining whether the current folder has an associated alternative folder, and if so, loading the alternative folder (S200); and determining whether to switch the folders, if so, determining, according to a switching mode, the alternative folder, and displaying an interface of the alternative folder (S300).

## Description

### TECHNICAL FIELD

The disclosure relates to the technical field of data processing, and particularly to a method and device for switching between multiple folders and a computer storage medium.

### BACKGROUND

At present, a touch screen technology has been popularized and applied on a large scale, and application of the touch screen technology to intelligent equipment such as a mobile phone and a tablet computer provides great convenience for people and improves utilization efficiency for a user when using the intelligent equipment.

With the increase of a utilization frequency of a user, electronic equipment has more and more folders and applications, and there is consequently brought such a problem that excessive folders cause users to open or switch folders more slowly and cause low efficiency.

In addition, when using the intelligent equipment to browse multiple folders under the same directory or search for a certain file under the same directory, a user is required to click to enter the folders one by one, for example, clicking to enter a certain folder, returning to a previous directory after entering the folder and then clicking to enter the next folder under the same directory. It is very inconvenient to browse multiple folders in such a manner, and search efficiency is very low. Nowadays, the informalization degree is high and the intelligent equipment is widely applied, but such a browsing and searching manner appears so impersonal.

### SUMMARY

In view of this, embodiments of the disclosure provide a method and device for switching between multiple folders and a computer storage medium, so as to improve response efficiency of folders.

A first aspect of the embodiments of the disclosure provide a method for switching between multiple folders, which includes that:
an operation on a folder is acquired, and an interface of a current folder is displayed;
whether there are one or more alternative folders associated with the current folder is determined, and in the case that there are one or more alternative folders associated with the current folder, the one or more alternative folders are loaded; and
whether switching between folders is required is determined, and in the case that switching between folders is required, an alternative folder is selected according to a switching manner, and an interface of the selected alternative folder is displayed.

In an embodiment, the step that whether there are one or more alternative folders associated with the current folder is determined, and in the case that there are one or more alternative folders associated with the current folder, the one or more alternative folders are loaded may specifically include that:
a current sequence number corresponding to the current folder is acquired;
whether there are one or more alternative sequence numbers associated with the current sequence number is determined, and in the case that there are one or more alternative sequence numbers associated with the current sequence number, the one or more alternative sequence numbers are acquired; and
the one or more alternative folders corresponding to the one or more alternative sequence numbers are loaded according to the one or more alternative sequence numbers.

In an embodiment, the step that whether switching between folders is required is determined, and in the case that switching between folders is required, an alternative folder is selected according to a switching manner, and an interface of the selected alternative folder is displayed may include that:
whether a sliding operation is received is determined;
in the case that a sliding operation is received, an alternative sequence number is selected according to a sliding direction of the sliding operation and a sequencing manner between the current sequence number and the one or more alternative sequence numbers; and
an alternative folder corresponding to the selected alternative sequence number is displayed.

In an embodiment, after the step that whether there are one or more alternative folders associated with the current folder is determined, and in the case that there are one or more alternative folders associated with the current folder, the one or more alternative folders are loaded, the method may further include that:
one or two folder names of one or two alternative folders corresponding to one or two alternative sequence numbers adjacent to the current sequence number is/are acquired, and is/are displayed on the interface of the current folder.

In an embodiment, before the step that switching between folders is required or not is determined, and in the case that switching between folders is required, an alternative folder is selected according to a switching manner, and an interface of the selected alternative folder is displayed, the method may further include that:
the current folder and the one or more alternative folders are loaded to a sliding page component according to the sequencing manner between the current sequence number and the one or more alternative sequence numbers.

A second aspect of the embodiments of the disclosure provides a device for switching between multiple folders, which may include:
a display module, configured to acquire an operation on a folder and display an interface of a current folder;
a loading module, configured to determine whether there are one or more alternative folders associated with the current folder, and in the case that there are one or more alternative folders associated with the current folder, load the one or more alternative folders; and
a switching module, configured to determine whether switching between folders is required, and in the case that switching between folders is required, select an alternative folder according to a switching manner and display an interface of the selected alternative folder.

In an embodiment, the loading module may include:
a current sequence number acquisition unit, configured to acquire a current sequence number corresponding to the current folder;
an alternative sequence number acquisition unit, configured to determine whether there are one or more alternative sequence numbers associated with the current sequence number, and in the case that there are one or more alternative sequence numbers associated with the current sequence number, acquire the one or more alternative sequence numbers; and
a loading unit, configured to load the one or more alternative folders corresponding to the one or more alternative sequence numbers according to the one or more alternative sequence numbers.

In an embodiment, the switching module may be configured to determine whether a sliding operation is received, and in the case that a sliding operation is received, select an alternative sequence number according to a sliding direction of the sliding operation and a sequencing manner between the current sequence number and the one or more alternative sequence numbers, and display an alternative folder corresponding to the selected alternative sequence number.

In an embodiment, the device may further include:
a name display module, configured to acquire and display one or two folder names of one or two alternative folders corresponding to one or two alternative sequence numbers adjacent to the current sequence number on the interface of the current folder.

In an embodiment, the device may further include:
a sliding loading module, configured to load the current folder and the one or more alternative folders to a sliding page component according to the sequencing manner of the current sequence number and the one or more alternative sequence numbers.

A third aspect of the embodiments of the disclosure provides a computer storage medium, in which a computer-executable instruction may be stored, the computer-executable instruction being configured to execute the method for switching between multiple folders according to at least one of claims 1-5.

According to the method and device for switching between multiple folders and the computer storage medium, when the current folder is displayed, the alternative folders associated with the current folder are loaded, and in such a manner, after an indication of entering a folder is received, the alternative folders may be displayed directly without having to wait for display after loading, so that response efficiency of displaying and opening the alternative folder is improved. In addition, software and hardware resources in electronic equipment such as a mobile phone are utilized more completely and more effectively, an effective utilization rate of the electronic equipment and intelligence of the electronic equipment are improved, and meanwhile, the efficiency of browsing folders and searching a file by a user is further improved.

### BRIEF DESCRIPTION OF DRAWINGS

FIG. 1 is a flowchart of a method for switching multiple folders according to an embodiment of the disclosure.
FIG. 2 is a block diagram showing function modules of a device for switching multiple folders according to an embodiment of the disclosure.
FIG. 3 is a block diagram showing a loading module of the device for switching multiple folders according to an embodiment of the disclosure.
FIG. 4 is a schematic diagram showing an interface for switching folders by sliding the screen according to an embodiment of the disclosure.

### DETAILED DESCRIPTION

In order to facilitate understanding of the disclosure, the disclosure will be described more fully hereinafter with reference to the accompanying drawings. Preferred embodiments of the disclosure are shown in the drawings. However, the disclosure may be implemented in many different forms, and is not limited to the embodiments described in the disclosure. Instead, these embodiments are provided to make the contents disclosed in the disclosure comprehended more thoroughly and comprehensively.

It is important to note that the disclosure is particularly applied to various kinds of electronic equipment, for example, a mobile phone, a tablet computer or other intelligent electronic equipment. In the following embodiments, only use scenarios of the mobile phone are described in detail.

For example, a method for switching between multiple folders includes the following steps: an operation on a folder is acquired, and an interface of a current folder is displayed; whether there are one or more alternative folders associated with the current folder is determined, and if YES, the alternative folders are loaded; and whether to switch between folders is determined, and if YES, an alternative folder is determined according to a switching manner, and an interface of the alternative folder is displayed.

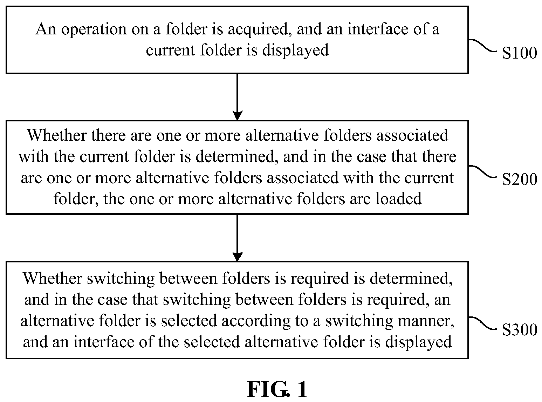

In an embodiment, as shown in FIG. 1, a method for switching between multiple folders includes the following steps.

In Step S100, an operation on a folder is acquired, and an interface of a current folder is displayed.

For example, the operation on a folder may include at least one of: choosing or selecting a folder, opening a file and choosing and opening a folder. For example, when a user chooses or enters a certain folder, the folder is determined as the current folder, and the current folder is displayed. In the embodiment, when the operation on a folder is acquired, a user operation or user indication input by the user may be received by virtue of a human-computer interaction interface, for example, a touch screen, a suspended touch screen, a mouse and a touchpad.

In this step, a system displays the current folder, a displayed content includes a folder display interface, the interface includes a content and/or directory in the folder, and the system loads and displays the current folder in a page form.

In Step S200, whether there are one or more alternative folders associated with the current folder is determined, and if there are one or more alternative folders associated with the current folder, the one or more alternative folders are loaded. For example, a display interface of each alternative folder associated with the current folder is loaded.

Folders under the same directory or the same type of display interface may be considered to be associated. In the embodiment, the folders under the same directory or the same type of display interface may have the same directory path or sequence number arrangement rule. Here, the same type of display interface may include a desktop and a management interface of an application. The desktop may usually be a main display interface of, for example, a mobile phone or a tablet computer with a display screen.

A number of the alternative folders associated with the current folder may be one, two or more, and may also be zero, which depends on a number of folders under the directory or display interface where the current folder is located. In this step, the alternative folders associated with the current folder are preloaded in a memory space, so that a display speed of the alternative folders is increased.

In an embodiment, Step S200 includes the following steps.

In Step S210, a current sequence number corresponding to the current folder is acquired.

In Step S220, whether there are alternative sequence numbers associated with the current sequence number is determined, and if YES, the alternative sequence numbers are acquired.

In Step S230, alternative folders corresponding to the alternative sequence numbers are loaded according to the alternative sequence numbers.

For example, a sequence number is set for each folder. For example, the sequence number is a folder index sequence number or directory sequence number automatically allocated by the system when the corresponding folder is created, or is a sequence number defined by the user, or is defined according to a location of the folder on a screen. For example, a sequence number of the current folder is the current sequence number, and when the user opens the current folder, the system acquires the current sequence number of the current folder. Optionally, every time when a folder is created, a unique sequence number is automatically generated, and a lifecycle of the sequence number is the same as a lifecycle of the corresponding folder. For another example, a sequence number of each folder is set sequentially.

Sequence numbers of folders are sequencable. For example, sequence numbers of folders under the same directory may correspond to names of the folders, and then sequence numbers of the folders under the same directory may be sequenced according to a letter sequence of the names of the folders. For another example, sequence numbers of folders displayed on a desktop correspond to locations of the folders displayed on the desktop, a desktop screen of an existing mobile phone usually has multiple sub-screens, and the sequence numbers of the folders may be correspondingly set according to a sub-screen number and locations of the folders located on the sub-screen, for example, the sequence number of the folder at the top of a left side of the first sub-screen is set to be 001, the sequence number of the folder on a right side of the folder with the sequence number 001 is set to be 002, and the sequence number of the folder at the bottom of a right side of the last sub-screen is set to be the last sequence number, so as to implement sequential arrangement in such a manner. Of course, names of folders may also be adopted as sequence numbers of folders, and a letter sequence of the folder names is determined as a sequence of the sequence numbers.

For example, the current sequence number of the current folder is acquired, the alternative sequence numbers associated with the current sequence number are acquired, and the acquired alternative sequence numbers correspond to alternative folders which are located under the same directory with the current folder. There may be one or more alternative sequence numbers, there may also be none, the number of the corresponding alternative folders may be one or more, and may also be zero, and the number of the alternative folders is determined by the number of folders under the same directory or the same type of display interface where the current folder is located. The system determines whether there are alternative sequence numbers associated with the current sequence number at first, if YES, acquires the alternative sequence numbers, and loads the alternative folders corresponding to the alternative sequence numbers according to the alternative sequence numbers. The loaded alternative folders are not directly displayed, and a loading manner is to preload contents in the alternative folders in the memory space of the system, so that an efficiency of displaying the alternative folders is improved.

In Step S300, whether to switch between the folders is determined, and if YES, an alternative folder is determined according to a switching manner, and an interface of the alternative folder is displayed.

In this step, determination is implemented according to whether a user indication indicating the folder need to be switched is received, and if folder switching is determined to be executed, a folder is determined according to the switching manner, and the folder is displayed.

Step S300 of the embodiment may usually be executed after Step S200. For example, Step S300 may include that: after the alternative folders are loaded, whether to switch the folders is determined. Of course, Step S300 and Step S200 may also be executed synchronously. Electronic equipment such as a mobile phone or a tablet computer loads the alternative folders and receives the indication, input by the user, of indicating the folders to be switched simultaneously. In such a manner, in a loading process, it is determined folders need to be switched, and the alternative folder is finally determined according to a judgment result and the loaded alternative folders. Therefore, a response speed of the electronic equipment may be increased, a response delay may be reduced, and a satisfaction degree of the user may be increased.

In an embodiment, Step S300 is specifically implemented as follows:
whether a screen is slid or not is determined, and if YES, an alternative sequence number is determined according to a sliding direction and a sequencing manner of the current sequence number and the alternative sequence numbers, and an alternative folder corresponding to the alternative sequence number is displayed.

In the embodiment, sliding of the screen refers to a sliding operation of the user on the screen. The sliding direction is a direction of the sliding operation. In the embodiment, the sliding operation may correspond to sliding of a finger of the user or a finger substitute on the touch screen.

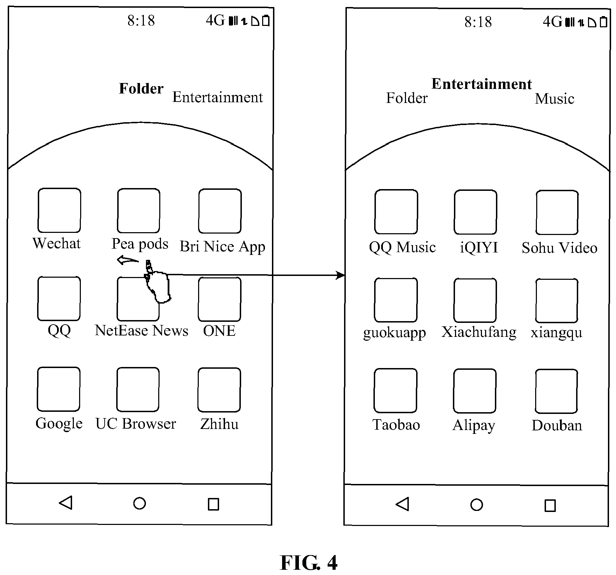

For example, the folder may be switched by sliding the screen. For the user, when browsing the folders, only need to use the finger to slide the screen to switch the folder directly without returning to a previous directory through a function button and then entering the other folders of the same level. As shown in FIG. 4, the user slides the screen to switch from the current folder to the alternative folder. The system determines whether the user slides the screen or not at first, and if the user slides the screen, sequentially or reversely selects an alternative sequence number on the basis of the current sequence number according to a direction in which the user slides the screen, then displays the alternative folder corresponding to the alternative sequence number, and the system displays the switched alternative folder. Because the system has preloaded the alternative folders in the previous step, when an instruction of sliding the screen is received from the user, the system may rapidly call the content in the alternative folder and display the content in the alternative folder. Therefore, folder switching efficiency is improved. At the same time, users can switch folders with only one action, which greatly improves the efficiency of browsing folders and searching files.

In an embodiment, the step that determining the alternative sequence number according to the sliding direction and the sequencing manner of the current sequence number and the alternative sequence numbers and displaying the alternative folder corresponding to the alternative sequence number is specifically implemented as follows:
if the sliding direction is leftward, an alternative sequence number adjacent to the current sequence number is determined in a descending manner, and the alternative folder corresponding to the alternative sequence number is displayed; and
if the sliding direction is rightward, an alternative sequence number adjacent to the current sequence number is determined in an ascending manner, and the alternative folder corresponding to the alternative sequence number is displayed;
   or,
if the sliding direction is rightward, an alternative sequence number adjacent to the current sequence number is determined in a descending manner, and the alternative folder corresponding to the alternative sequence number is displayed; and
if the sliding direction is leftward, an alternative sequence number adjacent to the current sequence number is determined in an ascending manner, and the alternative folder corresponding to the alternative sequence number is displayed.

For example, the sliding operation received from the user may be a sliding operation from right to left or a sliding operation from left to right. After the sliding operation is received, switching to a previous folder or next folder under the same directory is implemented correspondingly. For example, a sequence number of a folder currently displayed on a mobile phone is 5, the user slides the folder leftwards, a sequence number obtained by the system in a manner of ascending on the basis of the sequence number 5 is 6, then the folder is switched to a folder with the sequence number 6 after sliding, and in case of rightward sliding, the folder is switched to a folder with a sequence number 4. For another example, the user of the mobile phone slides rightwards for switching to the folder with the sequence number 4, and the user slides leftwards for switching to the folder with the sequence number 6. Therefore, using habits of different users may be met.

In an embodiment, after Step S200, the method includes that:
a folder name(s) of an alternative folder(s) corresponding to one or two alternative sequence numbers adjacent to the current sequence number is/are acquired, and is/are displayed on the interface of the current folder.

For improving utilization efficiency of the user and enabling the user to conveniently learn about folder information, as shown in FIG. 4, when the user browses the current folder, the folder name(s) of the alternative folder(s) corresponding to the one or two alternative sequence numbers adjacent to the current sequence number may be displayed on the content display interface of the current folder. For example, the folder name(s) are displayed on two sides of a current folder name, so that the user may know about the previous browsed or next to-be-browsed folder in advance when browsing the current folder.

For reducing memory occupation of the system and increasing a running speed of the system, in an embodiment, whether the current sequence number has adjacent alternative sequences or not is determined according to the current sequence number, and if YES, one or two alternative sequence numbers are acquired, and the alternative folders corresponding to the alternative sequence numbers are loaded.

There may be relatively more folders under the same directory or on the desktop. In this case, when the current folder is displayed, multiple folders under the same directory where the current folder is located are preloaded in the memory, so that a relatively larger memory space of the system is occupied, thus performance of the system is reduced. For reducing a memory occupancy rate of the system and improving the performance of the system, loading of excessive folders should be avoided. In the embodiment, one or two alternative sequence numbers adjacent to the current sequence number, specifically one or two sequence numbers obtained in the ascending and descending manners according to the sequence number of the currently displayed folder and closest to the sequence number, are acquired according to the acquired current sequence number, folders corresponding to the one or two closest sequence numbers are loaded, and the other folders are deleted from the memory space. For example, sequence numbers under the same directory include 1, 2, 3, 4, ......9, if the sequence number of the currently displayed folder is 3, the two alternative sequence numbers 2 and 4 are acquired, the system loads folders corresponding to the two alternative sequence numbers 2 and 4 into the memory space, and the user may switch from the interface of the folder with the sequence number 3 to the folder with the sequence number 2 or the folder with the sequence number 4 by sliding, and when the user slides for switching to the folder with the sequence number 4, the system displays a content of the folder with the sequence number 4, simultaneously loads the folders with the sequence numbers 3 and 5 in the memory, and deletes the loaded folder with the sequence number 2 from the memory space. When the current sequence number has only one adjacent sequence number, only the adjacent alternative sequence number is acquired. For example, the current sequence number is 1, and then the sequence number 2 is acquired as the alternative sequence number.

Therefore, the alternative folders may be preloaded to improve the switching efficiency, and meanwhile, insufficient memory space of the system and reduction of system performance caused by loading of excessive alternative folders may be avoided.

In an embodiment, before Step S300, the method further includes Step S250:
the current folder and the alternative folders are loaded to a sliding page component according to the sequencing manner of the current sequence number and the alternative sequence numbers.

The sliding page component may be a ViewPager control of an Android system. The ViewPager control has a sliding function, and a previous or next page may be displayed per sliding. In this step, the system loads the contents of the folders under the same directory into the ViewPager control in a page form, and for further reducing memory occupancy, only a previous folder and next folder of the currently displayed folder are loaded into the ViewPager control every time.

In an embodiment, before Step S100, the method further includes the following step.

In Step S101, preparations are made.

In this step, the screen of the mobile phone is in a to-be-operated stage. For example, the screen of the mobile phone displays the desktop at this moment, and there are various applications and folders displayed on the desktop. For another example, the screen of the mobile phone may also display a content interface of one folder at this moment, various applications and subfolders of the folder are displayed on the interface of the folder, and when the user requires to browse one subfolder on the desktop or in the interface of the folder, the system determines the folder as the current folder according to an operation on the folder performed by the user.

In an embodiment, the operation on the folder includes: a sliding instruction and a clicking instruction.

The user may select a folder to be opened in a manner of sliding the screen or clicking the screen. For example, the screen of the mobile phone displays the desktop at this moment, when the user requires to browse a content in a folder on the desktop, the user is required to click the corresponding folder on the screen, the operation of screen clicking of the user may be understood as an additional folder selection, and the system receives this screen clicking instruction, opens the folder and displays the folder. For example, the screen of the mobile phone displays a content interface of a folder at this moment, when the user requires to browse a subfolder of the folder, the user clicks the corresponding subfolder on the screen, and the system receives this screen clicking instruction, opens the subfolder and displays the subfolder; and when the user requires to browse other folders under the same directory of the folder, since the other folders under the same directory has been preloaded in the memory of the system, the user is only required to slide the screen, the operation of screen sliding of the user may be understood as folder selection, and the system receives this screen sliding instruction for switching to the other folders under the same directory, and displays the folder.

Based on the method for switching between multiple folders of any abovementioned embodiment, the disclosure further includes devices for switching between multiple folders corresponding to these methods, that is, the method for switching between multiple folders of each embodiment corresponds to an embodiment of a device for switching between multiple folders. For example, a device for switching between multiple folders includes a display module, a loading module and a switching module, wherein the display module is configured to acquire an operation on a folder and display a interface of a current folder; the loading module is configured to determine whether there are alternative folders associated with the current folder, and if YES, load the alternative folders; and the switching module is configured to determine whether switching between folders is required, and if YES, determine an alternative folder according to a switching manner and display an interface of the alternative folder.

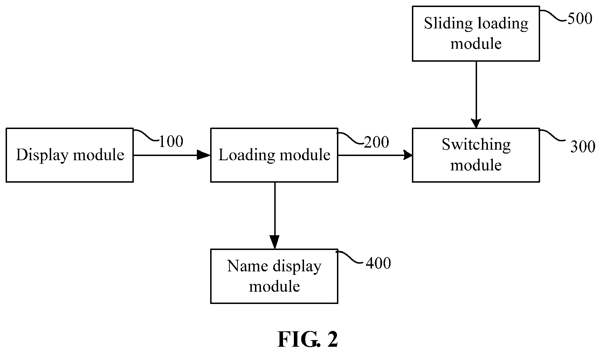

In an embodiment, as shown in FIG. 2, the device for switching between multiple folders provided by the embodiment of the disclosure includes:
a display module 100, configured to acquire an operation on a folder and display an interface of a current folder;
a loading module 200, connected with the display module 100 and configured to determine whether there are alternative folders associated with the current folder, and if YES, load the alternative folders; and
a switching module 300, connected with the loading module 200 and configured to determine whether switching between folders is required, and if YES, determine an alternative folder according to a switching manner and display an interface of the alternative folder.

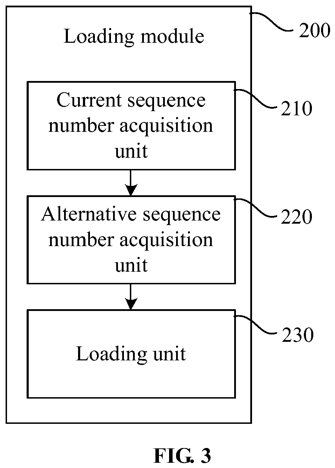

In an embodiment, as shown in FIG. 3, the loading module 200 includes:
a current sequence number acquisition unit 210, configured to acquire a current sequence number corresponding to the current folder;
an alternative sequence number acquisition unit 220, connected with the current sequence number acquisition unit 210 and configured to determine whether there are alternative sequence numbers associated with the current sequence number, and if YES, acquire the alternative sequence numbers; and
a loading unit 230, connected with the alternative sequence number acquisition unit 220 and configured to load alternative folders corresponding to the alternative sequence numbers according to the alternative sequence numbers.

In an embodiment, the switching module 300 is configured to determine whether a screen is slid or not, and if YES, determine an alternative sequence number according to a sliding direction and a sequencing manner of the current sequence number and the alternative sequence numbers, and display an alternative folder corresponding to the alternative sequence number. For example, the switching module 300 is configured to determine whether a sliding operation is received or not, and if YES, determine an alternative sequence number according to a sliding direction of the sliding operation and a sequencing manner of the current sequence number and the alternative sequence numbers, and display an alternative folder corresponding to the alternative sequence number.

In an embodiment, the device further includes:
a name display module 400, connected with the loading module 200 and configured to acquire and display a folder name(s) of an alternative folder(s) corresponding to one or two alternative sequence numbers adjacent to the current sequence number on the interface of the current folder.

In an embodiment, the device further includes:
a sliding loading module 500, connected with the switching module 300 and configured to load the current folder and the alternative folders to a sliding page component according to the sequencing manner of the current sequence number and the alternative sequence numbers.

For another example, a related function module corresponding to the method for switching between multiple folders of any related embodiment is arranged in the device for switching between multiple folders.

The display module 100 provided by the embodiment may correspond to a display touch screen in electronic equipment such as a mobile phone or a tablet computer. The loading module 200 and the switching module 300 may correspond to a processor or processing circuit in the electronic equipment. Here, the processor may include a processing chip with an information processing capability, for example, an Application Processor (AP), a Central Processing Unit (CPU), a Digital Signal Processor (DSP) or a Field Programmable Gate Array (FPGA).

The processing circuit may include an application-specific integrated circuit.

In the embodiment, the processor executes a predetermined code to implement the operations of the loading module 200 and the switching module 300.

An embodiment further provides a computer storage medium, in which a computer-executable instruction is stored, the computer-executable instruction being configured to execute at least one of the methods for switching between multiple folders in the abovementioned embodiments. For example, the method shown in FIG. 1 may be executed.

The computer storage medium may be various storage media such as an optical disk, a magnetic disk and a hard disk, and is optionally a non-transitory storage medium.

It is important to note that, in the system embodiment, each module is only divided according to a function logic, but is not limited to such division as long as a corresponding function may be realized. In addition, a specific name of each function unit is also only adopted for distinguishing and not intended to limit the scope of protection of the disclosure.

In addition, those skilled in the art may comprehend that all or part of steps in the method of each embodiment may be implemented by instructing related hardware through a program, and the corresponding program may be stored in a readable storage medium.

The above is only the preferred embodiment of the disclosure and not intended to limit the scope of protection of the disclosure. All modifications made within the principle of the disclosure shall be understood to fall within the scope of protection of the disclosure.

## Claims

1. A method for switching between a plurality of folders, **characterized in that** the method comprises:
acquiring an operation on a folder, and displaying an interface of a current folder;
determining whether there are one or more alternative folders associated with the current folder, and in the case that there are one or more alternative folders associated with the current folder, loading the one or more alternative folders; and
determining whether switching between folders is required, and in the case that switching between folders is required, selecting an alternative folder according to a preset switching manner, and displaying an interface of the selected alternative folder.

2. The method for switching between a plurality of folders according to claim 1, wherein the step of determining whether there are one or more alternative folders associated with the current folder, and in the case that there are one or more alternative folders associated with the current folder, loading the one or more alternative folders comprises:
acquiring a current sequence number corresponding to the current folder;
determining whether there are one or more alternative sequence numbers associated with the current sequence number, and in the case that there are one or more alternative sequence numbers associated with the current sequence number, acquiring the one or more alternative sequence numbers; and
loading the one or more alternative folders corresponding to the one or more alternative sequence numbers according to the one or more alternative sequence numbers.

3. The method for switching between a plurality of folders according to claim 2, wherein the step of determining whether switching between folders is required, and in the case that switching between folders is required, selecting an alternative folder according to a preset switching manner, and displaying an interface of the selected alternative folder comprises:
determining whether a sliding operation is received;
in the case that a sliding operation is received, selecting an alternative sequence number according to a sliding direction of the sliding operation and a sequencing manner between the current sequence number and the one or more alternative sequence numbers; and
displaying an alternative folder corresponding to the selected alternative sequence number.

4. The method for switching between a plurality of folders according to claim 2, further comprising:
after loading the one or more alternative folders,
acquiring and displaying one or two folder names of one or two alternative folders corresponding to one or two alternative sequence numbers adjacent to the current sequence number on the interface of the current folder.

5. The method for switching between a plurality of folders according to claim 2, further comprising:
before displaying the interface of the selected alternative folder,
loading the current folder and the one or more alternative folders to a sliding page component according to a sequencing manner between the current sequence number and the one or more alternative sequence numbers.

6. A device for switching between a plurality of folders, **characterized in that** the device comprises:
a display module, configured to acquire an operation on a folder and display an interface of a current folder;
a loading module, configured to determine whether there are one or more alternative folders associated with the current folder, and in the case that there are one or more alternative folders associated with the current folder, load the one or more alternative folders; and
a switching module, configured to determine whether switching between folders is required, and in the case that switching between folders is required, select an alternative folder according to a switching manner and display an interface of the selected alternative folder.

7. The device for switching between a plurality of folders according to claim 6, wherein the loading module comprises:
a current sequence number acquisition unit, configured to acquire a current sequence number corresponding to the current folder;
an alternative sequence number acquisition unit, configured to determine whether there are one or more alternative sequence numbers associated with the current sequence number, and in the case that there are one or more alternative sequence numbers associated with the current sequence number, acquire the one or more alternative sequence numbers; and
a loading unit, configured to load the one or more alternative folders corresponding to the one or more alternative sequence numbers according to the one or more alternative sequence numbers.

8. The device for switching between a plurality of folders according to claim 7, wherein
the switching module is configured to determine whether a sliding operation is received, and in the case that a sliding operation is received, select an alternative sequence number according to a sliding direction of the sliding operation and a sequencing manner between the current sequence number and the one or more alternative sequence numbers, and display an alternative folder corresponding to the selected alternative sequence number.

9. The device for switching between a plurality of folders according to claim 7, further comprising:
a name display module, configured to acquire and display one or two folder names of one or two alternative folders corresponding to one or two alternative sequence numbers adjacent to the current sequence number on the interface of the current folder.

10. The device for switching between a plurality of folders according to claim 7, further comprising:
a sliding loading module, configured to load the current folder and the one or more alternative folders to a sliding page component according to a sequencing manner between the current sequence number and the one or more alternative sequence numbers.

11. A computer storage medium stored therein instructions that, when executed by a processor, cause the processor to execute the method for switching between a plurality of folders according to at least one of claims 1-5.
